## Europäisches Patentamt
## European Patent Office
## Office européen des brevets

(19)

(11) Veröffentlichungsnummer: **0 139 097**
**B1**

(12) **EUROPÄISCHE PATENTSCHRIFT**

(45) Veröffentlichungstag der Patentschrift:
02.11.88

(51) Int. Cl.⁴: **B 29 C 45/80**

(21) Anmeldenummer: **84107992.4**

(22) Anmeldetag: **07.07.84**

(54) Formschliesseinheit einer Spritzgiessmaschine.

(30) Priorität: **03.08.83 DE 3327937**

(43) Veröffentlichungstag der Anmeldung:
**02.05.85 Patentblatt 85/18**

(45) Bekanntmachung des Hinweises auf die Patenterteilung:
**02.11.88 Patentblatt 88/44**

(84) Benannte Vertragsstaaten:
**AT CH FR GB IT LI NL**

(56) Entgegenhaltungen:
**US-A-3 728 057**
**US-A-4 005 974**
**US-A-4 029 457**

(73) Patentinhaber: **KLÖCKNER- WERKE AKTIENGESELLSCHAFT, Klöcknerstrasse 29, D-4100 Duisburg 1 (DE)**

(72) Erfinder: **Gutjahr, Lothar, Junkerfeldele 1, D-7809 Denzlingen (DE)**

(74) Vertreter: **Kiefer, Winfried, Dipl.- Phys., Klöckner-Werke Aktiengesellschaft Patentabteilung Klöcknerstrasse 29, D-4100 Duisburg 1 (DE)**

EP 0 139 097 B1

## Beschreibung

Die Erfindung betrifft eine Formschließeinheit einer Spritzgießmaschine mit mindestens einem hydraulischen Fahrzylinder und mindestens einem hydraulischen Formzuhaltezylinder für die auf Holmen geführte verschiebbare Formaufspannplatte mit der einen Hälfte einer geteilten Spritzgießform, dere andere Hälfte auf einer feststehend angeordneten Formaufspannplatte angeordnete ist.

Derartige Formschließeinheiten sind allgemein bekannt.

Der Spritzzyklus einer Spritzgießmaschine läuft bekanntlich in der Weise ab, daß bei geschlossener Form in das von den beiden Formhälften begrenzte Formnest plastifiziertes Kunststoffmaterial injiziert wird, die Form geöffnet, während des Öffnens das Spritzteil ausgestoßen und die Form zur Herstellung eines weiteren Spritzteils wieder zugefahren wird. Das Zufahren der Form erfolgt aus dem dem maximalen Abstand der Formaufspannplatten entsprechenden Abstand in der Weise, daß die verschiebbare Formaufspannplatte zunächst auf die Maximalgeschwindigkeit beschleunigt, dann bei Erreichen eines vorgegebenen Abstandes von der feststehend angeordneten Formaufspannplatte in Abhängigkeit von der Höhe der aufgespannten Spritzgießform abgebremst wird, so daß unter Kriechgeschwindigkeit die Form zugefahren wird. Anschließend wird der Formzuhaltezylinder zur Erzeugung der Fomzuhaltekraft (Schließkraft) hydraulisch beaufschlagt.

Das Ausstoßen eines Spritzteils erfolgt während des Auffahrens der Form. Es kann jedoch der Fall eintreten, daß ein Spritzteil an bzw. in einer Formhälfte hängen bleibt und das Zufahren der Form blockiert. Da das Zufahren der Form in der Endphase unter einem reduzierten hydraulischen Druck erfolgt, um die Formnester vor Beschädigungen zu schützen, bleibt die verschiebbare Formauf spannplatte mit der aufgespannten Formhälfte in der durch das Spritzteil blockierten Stellung stehen. Um einen derartigen Fehler, der im folgenden Formschließsicherungsfehler bezeichnet wird, zu erkennen, wurde bisher eine Mindestzeit vorgegeben, innerhalb deren die Schließstellung der Form in der Endphase zu erreichen war. Wird diese Zeit überschritten, dann wir ein Störsignal als Anzeige für einen Formschließfehler abgegeben. Es versteht sich von selbst, daß beim Zufahren der Form unter der Kriechgeschwindigkeit, d. h. bei reduziertem hydraulischen Druck, eine Fehleranzeige auch dann erfolgen kann, wenn beispielsweise der Schmierfilm auf den Holmen reißt, so daß aufgrund der erhöhten Reibung die verschiebbare Formaufspannplatte ebenfalls stehen bleibt. Entsprechend kann auch die Durchbiebung eines Holmes eine erartige Fehleranzeige auslösen. Daraus ergibt sich, daß bisher die Anzeige eines Forschließsicherungsfehlers keine eindeutige Anzeige ist. Darüberhinaus ist das zeitabhängige Erfassen von Formsicherungsfehlern problematisch, da beispielsweise beim Formwechsel unter gleichzeitiger Vergrößerung der Formhöhe ein längerer Formschließsicherungsweg vorzugeben ist, der naturgemäß die Vorgabe einer größeren Mindestzeit für das Schließen der Form in der Endphase zur Folge hat.

Der Erfindung liegt die Aufgabe zugrunde, Formschließeinheiten der eingangs genannten Art derart auszubilden, daß die Erkennung und Anzeige von Forschließsicherungsfehlern zeitunabhängig und eindeutig ist, d. h. eine Formschließsicherungsvorrichtung mit diesen Merkmalen zu schaffen.

Diese Aufgabe wird erfindungsgemäß dadurch gelöst, daß eine Gewindespindel mit der verschiebbaren Formaufspannplatte über eine Spindelmutter in Eingriff steht, in der feststehend angeordneten Formaufspannplatte frei drehbar gelagert und über eine Kupplung mit einem Schrittmotor gekoppelt ist, der Ventilkörper des 4/2-Wegeventils auf der Spindel axial verschiebbar angeordnet ist, der Schrittmotor in Abhängigkeit eines vorgegebenen Geschwindigkeits- und/oder Druckverlaufs als Funktion des Abstandes der Formhälften bzw. der Formaufspannplatten steuerbar ist und daß im Ventilgehäuse des 4/2-Wegeventils ein durch die Kupplung auslösbarer Schalter eine Ab-/oder/ Umschalt- bzw. Anzeigeeinrichtung beim Anstehen eines Formschließsicherungsfehlers angeordnet ist. Durch diese Maßnahmen wird eine eindeutige Anzeige von Formschließsicherungsfehlern geschaffen, die automatisch eventuelle Änderungen der Formhöhen berücksichtigt. Der Schrittmotor wird erfindungsgemäß in Abhängigkeit eines vorgegebenen Geschwindigkeits- und/oder Druckverlaufs als Funktion des Abstands der Formhälften bzw. der Formaufspannplatten gesteuert. Dies hat zur Folge, daß der Schrittmotor die Spindel dreht, wobei gleichzeitig der Ventilkörper des 4/2-Wegeventils entsprechend verschoben wird und einem mehr oder weniger großen Durchflußquerschnitt für das hydraulische Arbeitsmittel zu dem Fahrzylinder und dem Formzuhaltezylinder in der entsprechenden Bewegungsphase freigibt. Gleichzeitig wird eine entsprechende gegenläufige Verschiebung des Ventilkörpers auf der Spindel ausgelöst, der wiederum durch den Schrittmotor entsprechend dem vorgegebenen Druck- und/oder Geschwindigkeitsverlauf entgegengewirkt wird. Falls ein Formschließsicherungsfehler auftritt, wird der gesteuerte Schrittmotor weiterdrehen, um entsprechend dem vorgegebenen Verlauf die verschiebbare Formaufspannplatte in die Schließstellung der Form zu bringen, gleichzeitig vergrößert jedoch das Wegeventil aufgrund der nicht erfolgten bzw. der reduzierten Fahrbewegung gegenüber der vorgegebenen Schrittzahl für die Positionierung der verschiebbaren Formaufspannplatte den Querschnitt für das hydraulische Arbeitsmittel, was dann dazu führt, daß der axial verschiebbare Ventilkörper eine Verschiebung bis zum mechanischen Anschlag im Ventilgehäuse ausführt. Wesentlich ist hierbei, daß dies bei konstantem hydraulischen Druck erfolgt, d. h., daß an die Formschließeinheit kein Steuerbefehl dergestalt abgegeben wird, mit erhöhtem hydraulischen Druck die Form zuzufahren. Der Ventilkörper führt bei seiner Verschiebung bis zum mechanischen Anschlag eine maximale axiale Verschiebung aus, die gleichzeitig dazu führt, daß die zwischen der Spindel und dem Schrittmotor angeordnete Kupplung ebenfalls eine extreme axiale Verschiebung ausführt, die im störungsfreien Betrieb nicht auftritt und beim Vorliegen eines Formschließsicherungsfehlers den im Ventilgehäuse angeordneten Schalter auslöst, dessen Ausgangssignal dann zu einer Richtungsumkehr für die Schließeinheit führt bzw. einer Ab-/ oder Umschalt-/ bzw. Anzeigerichtung mit einem Display für den Formschließsicherungsfehler zugeführt wird. Der im Ventilgehäuse angeordnete Schalter ist vorzugsweise ein an sich bekannter berührungsloser elektronischer Schalter, der beispielsweise nach dem Prinzip des Hallgenerators arbeitet.

Erfindungsgemäß wird vom Prinzip des hydraulisch zurückgekoppelten starren Regelkreises Gebrauch gemacht. Nach diesem Prinzip der hydraulisch starren Rückkopplung arbeitende hydraulische Bauelemente sind an sich bereits bekannt (Prospekt der Firma Hartmann und Lämmle KG; Elektrohydraulischer Linearverstärker LVS, Ausgabe 10, 1977). Derartige Bauelemente wurden bisher lediglich dadurch verwendet, um zum Beispiel an Werkzeugmaschinen verschiebbare Maschinenteile exakt zu positionieren. Die Fachwelt hat jedoch bislang nie daran gedacht, dieses Prinzip in Formschließeinheiten für Spritzgießmaschinen zu integrieren, insbesondere nach diesem Prinzip eine Formschließsicherungseinrichtung zu schaffen.

Die Erfindung ist in der Zeichnung an von Ausführungsbeispielen erläutert.

Fig. 1    zeigt das Ausführungsbeispiel in schematischer Darstellung,
Fig. 2    das Detail aus Fig. 1 in vergrößerter Darstellung.

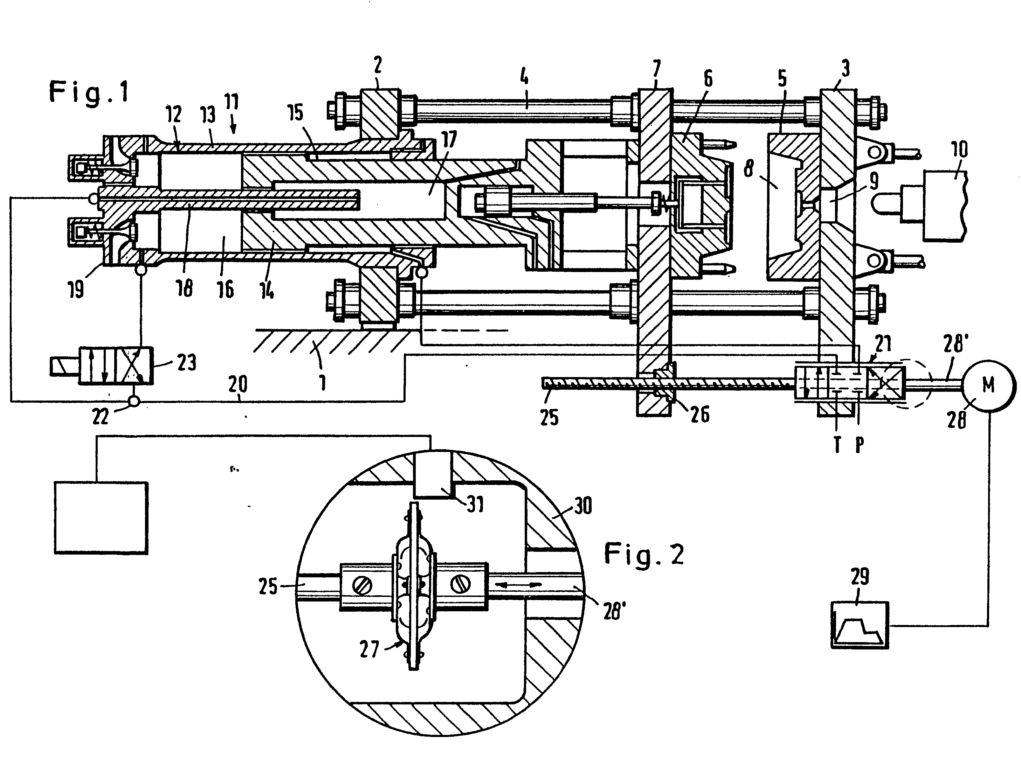

Die Fig. 1 zeigt eine Spritzgießmaschine in Seitenansicht, wobei die Schließeinheit im Schnitt dargestellt ist. Die Spritzgießmaschine besteht aus den beiden auf einem Maschinenbett 1 feststehend angeordneten Ständerplatten 2 und 3, die durch vier Holme 4 miteinander verbunden sind. Die Ständerplatte 3 bildet die feststehende Formaufspannplatte, auf die die eine Hälfte 5 einer geteilten Spritzgießform aufgespannt ist, deren andere mit 6 bezeichnete Formhälfte auf der verschiebbaren Formaufspannplatte 7 aufgespannt ist. Im geschlossenen Zustand umschließen die beiden Formhälften in an sich bekannter Weise das Formnest 8, in das über die Angußbohrung 9 mittels des schematisch (im Ausschnitt) dargestellten Spritzaggregats 10 die plastifizierte Masse eingespritzt wird. Die verschiebbare Formaufspannplatte weist auf ihrer von der Form abgewandten Seite die Schließeinheit 11 auf. Sie weist einen Fahrzylinder 12 auf, dessen Zylinder 13 in der Ständerplatte 2 feststehend angeordnet ist. Sein Kolben 14 ist unter der Ausbildung der Druckräume 15 und 16 beidseitig beaufschlagt. Die Kolbenstange dieses Kolbens ist mit der verschiebbaren Formaufspannplatte verbunden. Sie ist weiterhin unter Bildung des Druckraumes 17 hohl ausgebildet, in den teleskopartig ein rohrartiges Rundprofil 18 eintaucht. Dieses Rundprofil 18 ist fest mit der Stirnplatte 19 des Zylinders 13 verbunden und weist einen Anschluß für eine Druckleitung 20 auf, die mit dem 4/2-Wegeventil 21 verbunden ist, über das ein hydraulisches Arbeitsmittel zu- und abgeführt werden kann. Der Kolben 14, die Kolbenstange und das rohrartige Rundprofil 18 bilden den Fahrzylinder. An dem Abzweig 22 in der Zuflußleitung zwischen dem Anschluß des Fahrzylinders und dem 4/2-Wegeventil ist ein weiteres Wegeventil 23 angeordnet, das mit dem Druckraum 17 des Formschließzylinders verbunden ist. Die Gewindespindel steht mit der Spindelmutter 26 in Eingriff, die in der verschiebbaren Formaufspannplatte feststehend angeordnet ist und ist frei drehbar jedoch nicht axial verschiebbar durch die feststehende Formaufspannplatte und das Gehäuse des 4/2-Wegeventils hindurchgeführt und über eine Federkupplung 27 (Fig. 2) mit der Welle 28' des gesteuerten Schrittmotors 28 gekoppelt. Der Ventilkörper des Wegeventils 21 ist auf der Spindel 26 axial verschiebbar angeordnet. Der Schrittmotor 28 ist nach einem vorgegebenen Programm in Abhängigkeit der Geschwindigkeit der verschiebbaren Formaufspannplatte gesteuert. Die Werte sind in Abhängigkeit des von der verschiebbaren Formaufspannplatte zurückgelegten Weges gespeichert. Dies ist schematisch durch den Speicher 29 dargestellt. Beim Zufahren der Form wird nach Erreichen eines vorgebbaren Abstandes der verschiebbaren Formaufspannplatte von der feststehend angeordneten Formaufspannplatte durch ein Ausgangssignal des Speichers beispielsweise die Schrittzahl des Schrittmotors heraufgesetzt, wodurch automatisch die Schließgeschwindigkeit auf die Kriechgeschwindigkeit herabgesetzt wird.

Fig. 2 zeigt den durch einen Kreis in Fig. 1 gekennzeichneten Ausschnitt in vergrößerter Darstellung. Im Gehäuse 30 er des 4/2-Wegeventils 21 ist ein berührungsloser Näherungsschalter 31 angeordnet, dessen Magnetfeld durch eine entsprechende Verschiebung der Federkupplung 27 nach rechts derart beeinflußt wird, daß er ein Ausgangssignal an die Einrichtung 32 abgibt, die entweder die hydraulische Steuerung der Spritzgießmaschine abschaltet bzw. den Forschließsicherungsfehler auf einem Display anzeigt. Nach Umschalten auf die Kriechgeschwindigkeit wird die verschiebbare Form in die Stellung "Form geschlossen" Weiterverfahren. Befindet sich zum Beispiel ein nicht ordnungsgemäß ausgestoßenes Spritzteil zwischen den Formhälften, dann bleibt an der entsprechenden Stelle die verschiebbare Formaufspannplatte infolge der geringen hydraulischen Kräfte stehen. Dies hat zur Folge, daß das 4/2-Wegeventil den Durchflußquerschnitt für das hydraulische Arbeitsmittel erhöht, wodurch der Ventilkörper bis zu einem mechanischen Anschlag im Ventilgehäuse maximal axial verschoben wird. Gleichzeitig führt die Kupplung eine maximale axiale Verschiebung, in der Figur nach rechts, aus, so daß der Schalter anspricht und ein Störsignal als Formschließsicherungsfehler abgibt.

## Patentanspruch

Formschließeinheit einer Spritzgießmaschine mit mindestens einem hydraulischen Fahrzylinder und mindestens einem hydraulischen Formzuhaltezylinder für die auf Holmen geführte verschiebbare Formaufspannplatte mit der einen Hälfte einer geteilten Spritzgießform, deren andere Hälfte auf einer feststehend angeordneten Formaufspannplatte angeordnet ist,
  dadurch gekennzeichnet,
  daß eine Gewindespindel (25) mit der verschiebbaren Formaufspannplatte (7) über eine Spindelmutter (26) in Eingriff steht, in der feststehend angeordneten Formaufspannplatte (3) frei drehbar gelagert und über eine Kupplung (27) mit einem Schrittmotor (28) gekoppelt ist, der Ventilkörper eines 4/2-Wegeventils auf der Spindel axial verschiebbar angeordnet ist, der Schrittmotor in Abhängigkeit eines vorgegebenen Geschwindigkeits- und/oder Druckverlaufs als Funktion des Abstandes der Formhälften bzw. der Formaufspannplatten steuerbar ist und daß im Ventilgehäuse des 4/2-Wegeventils ein durch die Kupplung auslösbarer Schalter (31) einer Ab-/ oder Umschalt- bzw. Anzeigeeinrichtung (32-) beim Anstehen eines Formschließsicherungsfehlers angeordnet ist.

## Claim

Mould-closing unit of an injection moulding machine with at least one hydraulic travelling cylinder and at least one hydraulic mould-closing cylinder for the movable mould-clamping plate guided on guide bars, with the one half of a divided injection mould, whereof the other half is located on a stationary mould-clamping plate, characterized in that a threaded spindle (25) is in engagement with the movable mould-clamping plate (7) by way of a spindle nut (26), is mounted to rotate freely in the stationary mould-clamping plate (3) and is coupled by way of a coupling (27) to a stepping motor (28), the valve body of a 4/2-way valve is arranged to slide axially on the spindle, the steppping motor can be controlled in dependence upon a given speed and/or pressure condition as a function of the spacing of the mould halves or of the mould-clamping plates and that located in the valve housing of the 4/2-way valve is a switch (31) of a disconnection or change-over or indicating device (32), which switch can be tripped by the coupling, when a mould-closing fault occurs.

## Revendication

Unité de fermeture du moule d'une machine à mouler par injection avec au moins un vérin hydraulique de déplacement et au moins un vérin hydraulique de serrage du moule pour le plateau de fixation de moule mobile guidé sur des longerons, avec l'une des moitiés d'un moule à injection divisé, l'autre moitié étant disposée sur un plateau de fixation de moule stationnaire, caractérisée en ce qu'une broche filetée (25) est en prise avec le plateau de fixation de moule mobile (7) par l'intermédiaire d'un écrou de broche (26), qu'elle est montée de façon à pouvoir tourner librement dans le plateau de fixation de moule stationnaire (3) et qu'elle est couplée, par l'intermédiaire d'un dispositif d'accouplement (27), avec un moteur pas à pas (28), que le corps de la vanne à 4/2 voies est monté sur la broche de façon à pouvoir être déplacé dans le sens axial, que le moteur pas à pas peut être commandé, selon une courbe de vitesse et/ou de pression prédéterminée, en fonction de l'écartement des demi- moules et respectivement des plateaux de fixation de moule, et que le carter de la vanne à 4/2 voies comprend un interrupteur (31) d'un dispositif de mise à l'arrêt ou de commutation et respectivement d'affichage (32) pouvant être commandé par le dispositif d'accouplement en cas d'apparition d'un défaut de verrouillage du moule.

0 139 097

Fig.1

Fig. 2